Europäisches Patentamt

European Patent Office

Office européen des brevets

(19)

(11) Publication number: **0 301 990**
A2

(12)      # EUROPEAN PATENT APPLICATION

(21) Application number: 88500065.3

(51) Int. Cl.⁴: **B 62 B 9/00**

(22) Date of filing: 29.06.88

(30) Priority: 27.07.87 ES 8702687

(43) Date of publication of application:
01.02.89 Bulletin 89/05

(84) Designated Contracting States:
AT BE CH DE FR GB GR IT LI LU NL SE

(71) Applicant: Jané S.A.
Cartagena 203
E-08013 Barcelona (ES)

(72) Inventor: Jané Cabagnero, Ramon
c/o Jané, Sociedad Anonima Cartagena 203
E-08013 Barcelona (ES)

(74) Representative: Pastells Teixido, Manuel
c/o PASTELLS TEIXIDO, S.L. Pau Claris 138, 5-1a
E-08009 Barcelona (ES)

(54) Basket for light vehicles.

(57) The basket is attached to baby carriages and need not be removed for folding the carriage, to which end it has a simple constitution based on a flexible container (3) which is supported by a horizontal U-shaped frame (4) hingedly attached at the ends of the arms thereof at points (9) of the carriage chassis, in which position of use the basket (3) bears by way of the rigid bottom thereof on a cross member (15) at the lower rear portion of the carriage and by way of lower projections (7) of the frame against the rear frame members (8) of the carriage, the basket being foldable against the backrest (2) of the carriage seat, in which position it is retained by an annular catch (12) associated with resilient tapes (13) passing below the basket (3).

Fig. 1

EP 0 301 990 A2

## Description

### Basket for light vehicles

The present invention relates to a basket for light vehicles.

More particularly, this basket is of the type attached to the rear portion of a baby carriage, which baskets are generally constituted by metal rods, in the majority of cases it being necessary to remove them to be able to fold the carriage.

Although attempts have been made to manufacture these baskets formed by several hingedly connected parts, to be able to fold them together with the carriage, they have generally had a complex constitution making them more expensive and, moreover, impairing the aesthetic appearance of the carriage.

The present new basket, generally made of fabric and supported by a frame hingedly attached to the rear portion of the baby carriage or wheel chair chassis has been devised to overcome the above problems. Thus, simply by rotating the frame in an upward direction, the basket may be folded against the rear surface of the seat backrest, in which position it is held by an annular catch, attached to resilient members passing under the basket, and which engages a rearwardly extending projection of the seat backrest.

The frame comprises at the sides thereof, in the points of hinged correction, respective lower projections which abut the rear frame members of the carriage in the position of use of the basket, which, by way of the rigid bottom thereof, bears against a crossmember of the lower rear portion of the carriage chassis.

These and other features will be evident from the following detailed description which, to facilitate the understanding thereof, is accompanied by a sheet of drawings in which there has been illustrated one embodiment given only as a non-limiting example of the scope of the invention.

In the drawings

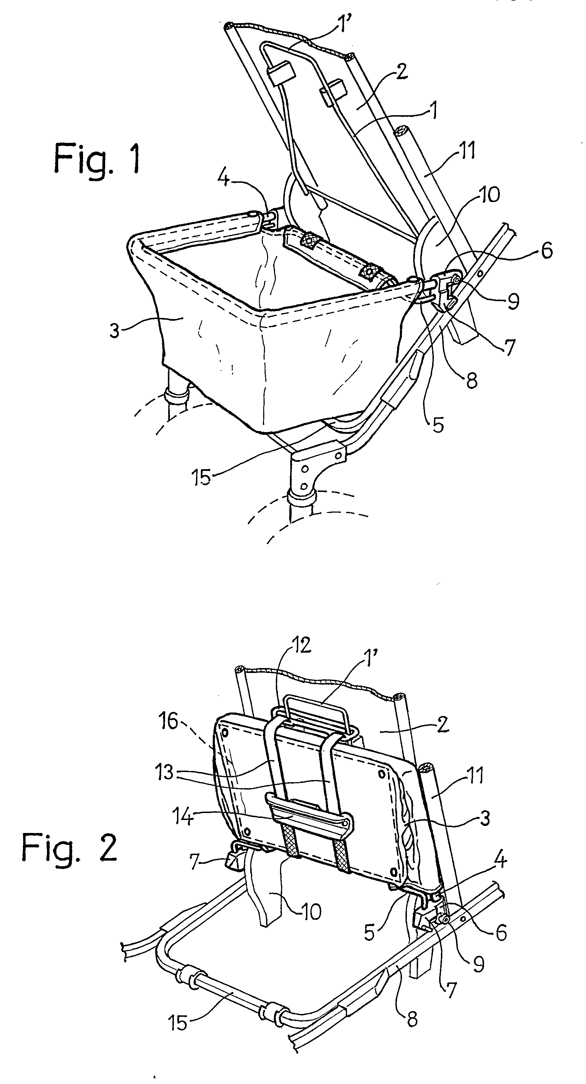

Figure 1 is a perspective view of the basket unit in question, attached to a baby carriage, and

Figure 2 shows the same basket in folded arrangement.

In the illustrated case, the basket is attached to a baby carriage having the features disclosed in Spanish utility model 292.203 and Spanish industrial model 111.719, which carriages comprise at the rear of the backrest a rod 1 of inverted U-shape, having diverging double bent arms constituting the manual control for the locking device, with which the backrest 2 is held in different positions.

The basket 3 is formed by a strong fabric such as canvas and has a parallelepipedic shape providing a large load capacity, the basket being hung from an upper frame formed by a U-shaped tubular member 4, with a transverse rod 5 extending across the open end of the U. The arms of the U-shaped member are extended and terminated with respective terminal members 6 forming respective lower projections 7 supported on the rear frame members 8 of the carriage in the position of use of the basket, said upper frame being hingedly mounted at rear points 9 of the carriage chassis, precisely in this case, on the blocks 10 attached to the lower portion of the arms 11 of the handlebar and which constitute supports for maintaining the folded carriage vertical on the floor.

This hinging 9 allows the basket to be folded against the rear surface of the backrest 2, in which position it is held by an oblong annular catch 12, associated with two resilient tapes 13 passing under the basket, and which is attached removably to the rear projection of the backresst and which is formed, in this case, by the upper end 1' of the U-shaped rod 1.

Said resilient tapes are guided through a cross bar 14 attached to the bottom of the basket and outwardly channelled to support it, in the unfolded position of use, on a cross member 15 at the lower rear of the carriage, which cross member, in the present case, connects the rear frame members 8 together.

The basket is supported on said cross member by way of its rigid bottom formed by an inner plate member 16.

It will be understood that this basket may be attached to any other type of baby carriage, apart from those cited above.

### Claims

1.- A basket for light vehicles, of the type attached to the rear portion of baby carriages, characterised essentially in that the basket (3) is flexible and is suspended from a frame (4) hingedly attached at rear points (9) of the carriage chassis, such that, by rotating the frame (4) in an upward direction, the basket (3) is folded against the backrest (2), in which position it is held by an annular catch (12) associated with resilient members (13) passing below the basket (3), said catch removably engaging a rear projection (1') of the backrest (2).

2.- A basket for light vehicles, according to claim 1, characterised in that in the point of hinging (9) of the basked holder frame (4) to the baby carriage there are provided at the sides respective lower projections (7) abutting the rear frame members (8) of the carriage in the position of use of the basket (3), which bears by way of the rigid bottom (16) thereof on a cross member (15) of the lower rear portion of the carriage.

Fig. 1

Fig. 2